(19) Europäisches Patentamt

European Patent Office

Office européen des brevets

(11) **EP 1 052 792 A2**

(12) **EUROPEAN PATENT APPLICATION**

(43) Date of publication:
**15.11.2000 Bulletin 2000/46**

(51) Int. Cl.⁷: **H04B 10/155**

(21) Application number: **00304005.2**

(22) Date of filing: **12.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **14.05.1999 JP 13496299**

(71) Applicant: **NEC CORPORATION Tokyo (JP)**

(72) Inventors:
• **Yasuda, Norihiro**
  **Tokyo (JP)**
• **Ogata, Takaaki**
  **Tokyo (JP)**

(74) Representative:
**Moir, Michael Christopher et al**
**Mathys & Squire**
**100 Gray's Inn Road**
**London WC1X 8AL (GB)**

(54) **Optical transmitter**

(57) An optical transmitter includes a light source, optical modulation section, and first phase comparison circuit. The light source outputs an optical signal. The optical modulation section is driven by a driving signal to modulate the optical signal from the light source. The first phase comparison circuit controls the phase of the driving signal of the optical modulation section on the basis of the comparison result between the phase of the optical signal modulated by the optical modulation section and that of the driving signal of the optical modulation section.

FIG. 1

**Description**

Background of the Invention

The present invention relates to an optical transmitter and, more particularly, to an optical transmitter which is preferably used in a long-distance optical transmission system and can output an optical signal of an always stable optical transmission waveform with high reliability.

Conventionally, large-capacity transmission and very-long-distance transmission systems have extensively been studied and developed. Demands have arisen for a technique of transmitting a larger capacity of data over a longer distance. Currently available very-long-distance, large-capacity transmission systems include an RZ (Return to Zero) code format.

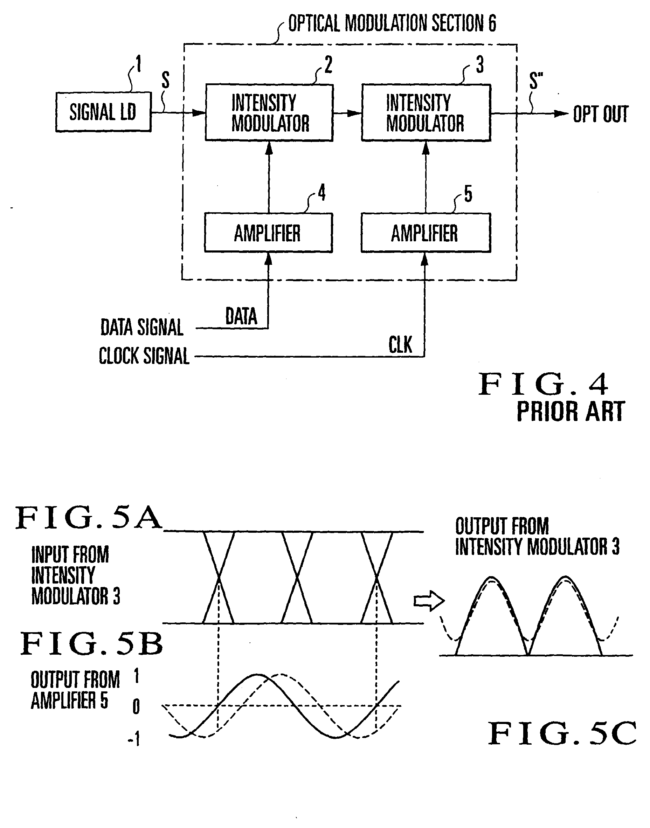

Fig. 4 shows an optical transmitter to which a conventional RZ code format is applied. In Fig. 4, reference numeral 1 denotes an optical signal output laser diode (signal LD) serving as a light source; 2 and 3, intensity modulators for modulating the intensity of an optical signal; and 4 and 5, amplifiers for amplifying a data signal (DATA) and clock signal (CLK). The intensity modulators 2 and 3 and the amplifiers 4 and 5 constitute an optical modulation section 6. In the optical modulation section 6, the two intensity modulators 2 and 3 are connected in series, and the amplifiers 4 and 5 are respectively connected to the intensity modulators 2 and 3.

The operation principle of the optical transmitter having this arrangement will be explained. An optical signal S output from the signal LD 1 is input to the first intensity modulator 2 where a data signal (DATA) amplified by the amplifier 4 is superposed on the optical signal S. The optical signal on which the data signal (DATA) output from the intensity modulator 2 is superposed is input to the second intensity modulator 3 where a clock signal (CLK) amplified by the amplifier 5 is superposed on the optical signal. In this manner, an RZ optical signal S'' can be generated.

Figs. 5A to 5C show the generation principle of an RZ code optical transmission waveform.

An RZ code signal shown in Fig. 5C has an RZ waveform generated by making the crossing point of NRZ (Fig. 5A) input to the intensity modulator 3 and the zero point of a clock signal (Fig. 5B) output from the amplifier 5 coincide with each other.

In the conventional optical transmitter, when the crossing point of NRZ and the zero point of the clock signal are out of phase, the optical transmission waveform of the RZ code deforms to a waveform represented by the broken line, as shown in Fig. 5C. That is, when the data and clock signals are not phase-locked with each other, the optical transmission waveform of the RZ code deforms to greatly deteriorate data after long-distance transmission.

However, the conventional optical transmitter does not have any function of adjusting phase locking between the data and clock signals. The phases of the data and clock signals readily change due to the difference between the characteristics of the amplifiers 4 and 5 upon temperature changes, and the difference between their individual deterioration rates. Accordingly, data after long-distance transmission greatly deteriorates.

Summary of the Invention

It is an object of the preferred embodiments of the present invention to provide an optical transmitter which can easily cope with changes in ambient temperature, and outputs an optical signal of an always-stable optical transmission waveform with high reliability.

It is another object of the preferred embodiments of the present invention to provide an optical transmitter for minimizing deterioration of an optical signal even after long-distance transmission.

According to the present invention, there is provided an optical transmitter comprising a light source for outputting an optical signal, optical modulation means which is driven by a driving signal to modulate the optical signal from the light source, and first phase comparison means for controlling a phase of the driving signal of the optical modulation means on the basis of a comparison result between a phase of the optical signal modulated by the optical modulation means and a phase of the driving signal of the optical modulation means.

Brief Description of the Drawings

Preferred features of the present invention will now be described, by way of example only, with reference to the accompanying drawings, in which:-

Fig. 1 is a block diagram showing an optical transmitter of the RZ code scheme according to the first embodiment of the present invention;
Figs. 2A to 2K are timing charts of the main part of the optical transmitter shown in Fig. 1;
Fig. 3 is a block diagram showing an optical transmitter of the RZ code scheme according to the second embodiment of the present invention;
Fig. 4 is a block diagram showing an optical transmitter of a conventional RZ code format; and,
Figs. 5A to 5C are waveform charts each showing the state of a conventional RZ code optical transmission waveform.

Description of the Preferred Embodiments

The present invention will be described in detail below with reference to the accompanying drawings.

[First Embodiment]

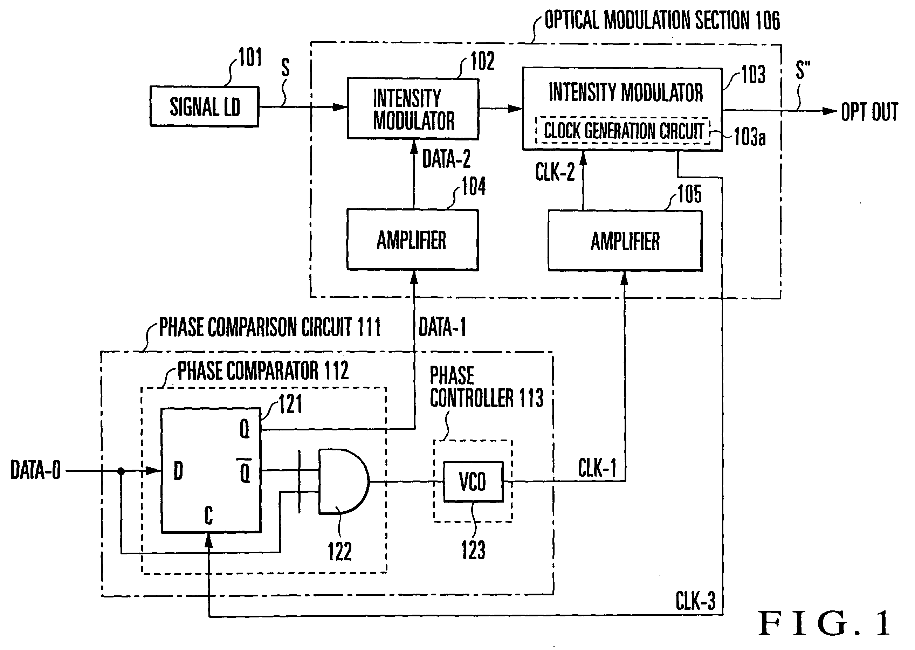

Fig. 1 shows an optical transmitter of the RZ code scheme according to the first embodiment of the present invention. In Fig. 1, the optical transmitter of this embodiment comprises an optical signal output laser diode (signal LD) 101 serving as a light source, an optical modulation section 106 for optically modulating an optical output S from the signal LD 101 on the basis of a data signal DATA-1 and analog clock signal CLK-1, and a phase comparison circuit 111 for controlling the phases of the data signal DATA-1 and clock signal CLK-1 output to the optical modulation section 106.

The optical modulation section 106 includes two intensity modulators 102 and 103 connected in series to modulate the intensity of the optical signal S from the signal LD 101, and amplifiers 104 and 105 for amplifying the data signal DATA-1 and clock signal CLK-1 output from the phase comparison circuit 111, and outputting the amplified signals as a data signal DATA-2 and clock signal CLK-2 to the intensity modulators 102 and 103.

The intensity modulator 102 modulates the intensity of the optical signal S using the data signal DATA-2 from the amplifier 104. The intensity modulator 103 has a clock generation circuit 103a for shaping the waveform of the analog clock signal CLK-2 amplified by the amplifier 105 to generate a digital clock signal CLK-2' (to be described later), and generating a digital clock signal CLK-3 obtained by multiplying the clock signal CLK-2' to output the clock signal CLK-3 to the phase comparison circuit 111.

The phase comparison circuit 111 includes a phase comparator 112 for comparing the phase of the data signal DATA-0 with that of the clock signal CLK-3 from the optical modulation section 106, and a phase controller 113 whose output is controlled by an output from the phase comparator 112. The phase comparator 112 has a D type F/F (Flip-Flop) 121 for receiving the data signal DATA-0 in response to the clock signal CLK-3 and outputting the data signal DATA-1 as a Q output (positive logic) to the optical modulation section 106, and an EXOR (Exclusive OR) 122 for exclusive-ORing a $\overline{Q}$ output (negative logic) from the F/F 121 and the data signal DATA-0. The phase controller 113 has a VCO (Voltage-Controlled Oscillator) 123 for receiving a voltage signal from the EXOR 122 and outputting the clock signal CLK-1 to the optical modulation section 106.

In the optical transmitter having this arrangement, the data signal DATA-0 serving as a driving signal input to the phase comparison circuit 111 is divided into two, which are respectively input to the F/F 121 and EXOR 122. The F/F 121 regenerates the data signal DATA-0 in response to the clock signal CLK-3, and outputs the data signal DATA-1 to the optical modulation section 106.

The EXOR 122 exclusive-ORs the data signal DATA-0 and the $\overline{Q}$ output from the F/F 121 to compare their phases, and outputs a voltage signal based on the comparison result to the VCO 123. At this time, the $\overline{Q}$ output from the F/F 121 is phase-locked with an optical signal S'' output from the intensity modulator 103. The VCO 123 outputs to the optical modulation section 106 the clock signal CLK-1 whose frequency is controlled in accordance with the voltage signal from the EXOR 122.

The data signal DATA-1 output from the phase comparison circuit 111 is amplified into the data signal DATA-2 by the amplifier 104, and superposed on the optical signal S from the signal LD 101 by the intensity modulator 102. The intensity modulator 102 generates an optical signal of an NRZ (No-Return-to-Zero) sign, which is input to the intensity modulator 103.

The clock signal CLK-1 output from the phase comparison circuit 111 is amplified to the clock signal CLK-2 by the amplifier 105, and the clock signal CLK-2 is input to the clock generation circuit 103a of the intensity modulator 103. The intensity modulator 103 superposes the clock signal CLK-2' generated by the clock generation circuit 103a on the optical signal of the NRZ code from the intensity modulator 102. The intensity modulator 103 outputs the optical signal S'' of the RZ code as OPT OUT. The clock signal CLK-2' is multiplied by the clock generation circuit 103a to input the clock signal CLK-3 to the F/F 121 of the phase comparison circuit 111.

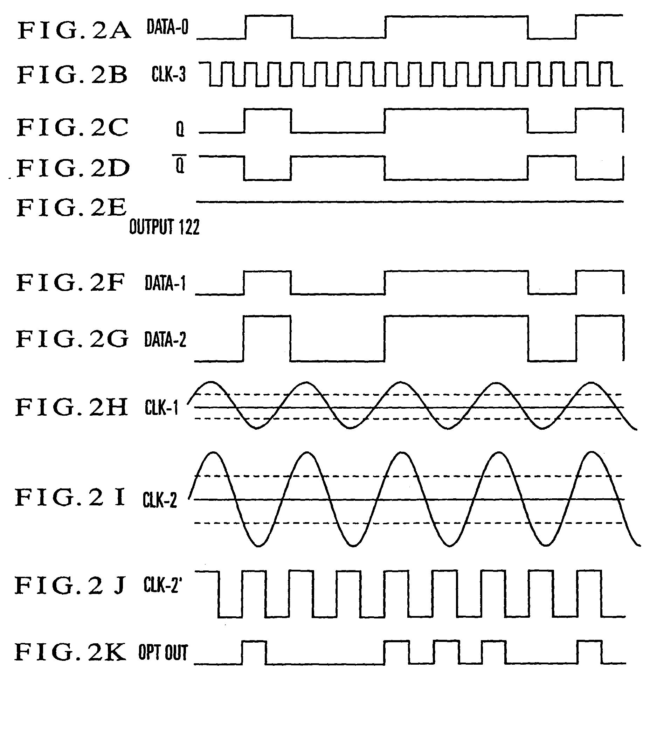

The operation of the phase comparison circuit 111 will be explained in detail with reference to the timing charts of Figs. 2A to 2K.

The data signal DATA-0 (Fig. 2A) input to the phase comparison circuit 111 is divided into two, one of which is input to the F/F 121, and the other of which is input to the EXOR 122. The F/F 121 regenerates the data signal DATA-0 in response to the clock signal CLK-3 (Fig. 2B) to output the Q output as the data signal DATA-1 to the optical modulation section 106 (Figs. 2C and 2F).

The clock signal CLK-3 input to the F/F 121 is generated from the clock signal CLK-2 (Fig. 2I) input from the amplifier 105 to the intensity modulator 103. That is, the clock signal CLK-1 (Fig. 2H) output from the VCO 123 is amplified to the clock signal CLK-2 by the amplifier 105, and the clock signal CLK-2 is input to the clock generation circuit 103a of the intensity modulator 103. The clock signal CLK-2 input to the clock generation circuit 103a is shaped into the intensity modulation clock signal CLK-2' (Fig. 2J). The clock signal CLK-2' is multiplied by the clock generation circuit 103a to generate the clock signal CLK-3.

The EXOR 122 outputs a voltage signal (Fig. 2E) based on the data signal DATA-0 and the $\overline{Q}$ output (Fig. 2D) from the F/F 121. The output voltage of the EXOR 122 varies when two input data signals become out-of-phase. Two data signals input to the EXOR 122 become out-of-phase upon changes in the clock signal CLK-3 input to the F/F 121. The VCO 123 detects the change amount upon a change in input voltage, and controls the frequency of the clock signal CLK-1 so as to keep the phase of the clock signal CLK-2 input to the intensity modulator 103 constant.

When the output voltage of the EXOR 122 changes, i.e., the phase of the clock signal CLK-3 input to the F/F 121 changes, the phases of the data signal DATA-2 (Fig. 2G) and clock signal CLK-2 respectively input to the intensity modulators 102 and 103 are controlled to always lock with each other under the control of the clock signal CLK-1 by the VCO 123.

In the first embodiment, the phase of the clock signal CLK-2 output from the amplifier 105 may change depending on the temperature characteristic of the device. If the phase of the clock signal CLK-2 changes, its change amount is fed back to the F/F 121 as CLK-3 to change the phases of the Q and $\overline{Q}$ outputs from the F/F 121. Thus, the output voltage of the EXOR 122 changes. The VCO 123 detects this change, and controls the frequency of the clock signal CLK-1 so as to keep the phase of the clock signal CLK-2 constant. Consequently, the phase of the clock signal CLK-1 input to the amplifier 105 is corrected, and the phase of the clock signal CLK-2 input to the intensity modulator 103 is also corrected.

Since the corrected clock signal CLK-3 is input to the F/F 121, the data signal output from the F/F 121 does not vary, and a constant phase relationship can always be maintained regardless of changes in ambient temperature. In other words, a stable optical signal S'' (Fig. 2K) of the RZ code can be output as OPT OUT.

The first embodiment additionally adopts the phase comparison circuit 111 made up of the phase comparator 112 and phase controller 113. The phases of the data signal DATA-2 and clock signal CLK-2 input to the optical modulation section 106 can always be controlled constant. The phase shift between the data signal DATA-2 and clock signal CLK-2 can always be held constant in accordance with the temperature characteristic of the device. Even if the ambient temperature changes, data (optical signal) can be transmitted without deterioration.

As a result, data (optical signal) can be transmitted without deterioration even in large-capacity transmission in which transmission deterioration is greatly influenced by a slight phase shift between data and clock signals.

[Second Embodiment]

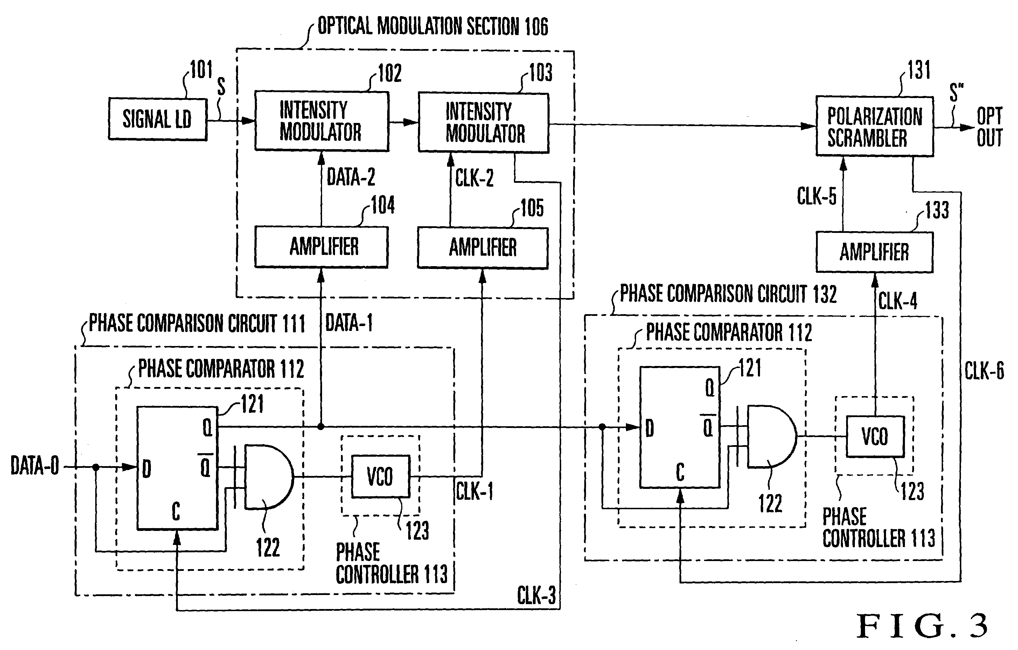

Fig. 3 shows an optical transmitter to which the RZ code scheme according to the second embodiment of the present invention is applied. The same reference numerals as in Fig. 1 denote the same parts in Fig. 3, and a description thereof will be omitted.

In Fig. 3, the optical transmitter further comprises, in addition to the optical modulation section 106 and phase comparison circuit 111 in Fig. 1, a polarization scrambler 131 connected to the next stage (output side) of the optical modulation section 106, a phase comparison circuit 132 for receiving a data signal DATA-1 from the phase comparison circuit 111, and an amplifier 133 for amplifying an output from the phase comparison circuit 132 and outputting the amplified output to the polarization scrambler 131.

The phase comparison circuit 132 has the same arrangement as that of the phase comparison circuit 111, and is constituted by a phase comparator 112 having an F/F 121 and EXOR 122, and a phase controller 113 having a VCO 123.

The polarization scrambler 131 is an optical device for changing polarized light using a clock signal in order to reduce the loss of transmission power caused by the polarization dependency of an optical component constituting an optical transmission system. Using the polarization scrambler 131 can reduce the transmission power, and a long-distance optical transmission system can be implemented.

The phase comparison circuit 132 detects variations in the phase of a clock signal CLK-6 fed back from the polarization scrambler 131, and controls a clock signal CLK-4 output to the amplifier 133 so as to keep the phase of a clock signal CLK-5 input to the polarization scrambler 131 constant.

The second embodiment employs the phase comparison circuit 132 for performing feedback control as a generation circuit for a clock signal input to the polarization scrambler 131. The phase can always be held constant regardless of the temperature characteristic of the amplifier 133, and a stable optical transmission waveform can be generated.

In the above embodiments, the intensity modulator 103 comprises the clock generation circuit 103a. Alternatively, the clock generation circuit 103a may be independent of the intensity modulator 103.

As has been described above, according to the present invention, when a driving signal and clock are to be superposed on an optical signal to transmit an optical waveform, the driving signal and clock can be superposed on the optical signal while their phases are always held constant, and an always-stable optical transmission waveform can be output. Changes in ambient temperature can be easily coped with, and an optical signal of an always-stable optical transmission waveform with high reliability can be output.

By applying this optical transmitter to a very-long-distance optical transmission system, deterioration of an optical signal can be minimized even upon long-distance transmission, and always-stable very-long-distance optical transmission with high reliability can be implemented.

While the present invention has been described in its preferred embodiments, it is to be understood that the words which have been used are words of description rather than limitation, and that changes may be made to the invention without departing from its scope as defined by the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

An optical transmitter includes a light source, optical modulation section, and first phase comparison circuit. The light source outputs an optical signal. The optical modulation section is driven by a driving signal to modulate the optical signal from the light source. The first phase comparison circuit controls the phase of the driving signal of the optical modulation section on the basis of the comparison result between the phase of the optical signal modulated by the optical modulation section and that of the driving signal of the optical modulation section.

**Claims**

1. An optical transmitter characterized by comprising:

   a light source (101) for outputting an optical signal;
   optical modulation means (106) which is driven by a driving signal to modulate the optical signal from said light source; and
   first phase comparison means for controlling a phase of the driving signal of said optical modulation means on the basis of a comparison result between a phase of the optical signal modulated by said optical modulation means and a phase of the driving signal of said optical modulation means.

2. An optical transmitter according to claim 1, wherein said first phase comparison meant comprises:

   a phase comparator (112) for comparing the phase of the optical signal modulated by said optical modulation means with the phase of the driving signal of said optical modulation means; and
   a phase controller (113) for controlling the phase of the driving signal of said optical modulation means on the basis of a comparison result of said phase comparator so as to make constant the phase of the optical signal modulated by said optical modulation means and the phase of the driving signal of said optical modulation means.

3. An optical transmitter according to claim 2, wherein the driving signal is made up of a data signal and a clock signal generated from the data signal,

   said phase comparator compares a phase of an input data signal with a phase of a data signal regenerated in accordance with a clock signal for driving said optical modulation means, and
   said phase controller controls a phase of the clock signal for driving said optical modulation means on the basis of the comparison result of said phase comparator.

4. An optical transmitter according to claim 3, wherein said phase comparator comprises:

   a flip-flop (121) for latching the input data signal in accordance with the clock signal for driving said optical modulation means; and
   an exclusive OR circuit (122) for exclusive-ORing the input data signal and a latch output from said flip-flop, and
   said phase controller comprises a voltage-controlled oscillator (123) for controlling a frequency of the clock signal for driving said optical modulation means in accordance with a voltage signal output from said exclusive OR circuit.

5. An optical transmitter according to claim 3, wherein said optical modulation means comprises:

   a first intensity modulator (102) for modulating the optical signal from said light source in accordance with the data signal regenerated by said phase comparator; and
   a second intensity modulator (103) for modulating the optical signal output from said first intensity modulator in accordance with the clock signal output from said phase controller.

6. An optical transmitter according to claim 5, wherein said optical modulation means further comprises:

   a first amplifier (104) for amplifying the data signal regenerated from said phase comparator and outputting the amplified data signal to said first intensity modulator; and
   a second amplifier (105) for amplifying the clock signal output from said phase controller and outputting the amplified clock signal to said second intensity modulator.

7. An optical transmitter according to claim 1, further comprising:

   a polarization element (131) which is driven by a driving signal to change polarization of the optical signal output from said optical modulation means; and
   second phase comparison means (132) for controlling a phase of the driving signal of said polarization element on the basis of a comparison result between a phase of the optical signal output from said polarization element and a phase of the driving signal of the optical modulation means.

8. An optical transmitter according to claim 7, wherein said second phase comparison means comprises:

   a phase comparator (112) for comparing the phase of the optical signal output from said polarization element with the phase of the driving signal of said optical modulation means; and
   a phase controller (113) for controlling the phase of the driving signal of said polarization element on the basis of a comparison result of said phase comparator so as to make constant the phase of the optical signal output from said polarization element and the phase of the driving signal of said optical modulation means.

9. An optical transmitter according to claim 8, further comprising amplification means (133) for amplifying the driving signal from said phase controller and outputting the amplified driving signal to said polarization element.

10. An optical transmitter according to claim 7, wherein said polarization element comprises a polarization scrambler.

FIG.1

FIG.2A DATA-0

FIG.2B CLK-3

FIG.2C Q

FIG.2D $\overline{Q}$

FIG.2E OUTPUT 122

FIG.2F DATA-1

FIG.2G DATA-2

FIG.2H CLK-1

FIG.2 I CLK-2

FIG.2 J CLK-2'

FIG.2K OPT OUT

OPTICAL MODULATION SECTION 106

SIGNAL LD 101 S

INTENSITY MODULATOR 102

INTENSITY MODULATOR 103

POLARIZATION SCRAMBLER 131 S" OPT OUT

DATA-2

CLK-2

CLK-5

AMPLIFIER 104

AMPLIFIER 105

AMPLIFIER 133

CLK-4

PHASE COMPARISON CIRCUIT 132

PHASE COMPARISON CIRCUIT 111 DATA-1

PHASE COMPARATOR 112

PHASE COMPARATOR 112

CLK-6

DATA-0

D

Q

Q̄

C

121

122

VCO 123

CLK-1

PHASE CONTROLLER 113

D

Q

Q̄

C

121

122

VCO 123

PHASE CONTROLLER 113

CLK-3

EP 1 052 792 A2

9

FIG. 3

OPTICAL MODULATION SECTION 6

FIG. 4
PRIOR ART

FIG. 5A

INPUT FROM
INTENSITY
MODULATOR 3

OUTPUT FROM
INTENSITY MODULATOR 3

FIG. 5B

OUTPUT FROM
AMPLIFIER 5

1
0
-1

FIG. 5C